# EUROPÄISCHE PATENTSCHRIFT

(11) **EP 1 381 531 B1**
(45) Veröffentlichungstag und Bekanntmachung des Hinweises auf die Patenterteilung: **02.11.2016**
(21) Anmeldenummer: 02764045.7
(22) Anmeldetag: 23.04.2002
(51) Int. Cl.: B60L 13/04

(54) **MAGNETANORDNUNG FÜR DIE AUFHÄNGUNG UND FÜHRUNG SCHWEBENDER FAHRZEUGE UND TRANSPORTSYSTEME**
MAGNET ASSEMBLY FOR THE SUSPENSION AND GUIDANCE OF SUSPENDED VEHICLES AND TRANSPORT SYSTEMS
ENSEMBLE MAGNETIQUE POUR LA SUSTENTATION ET LE GUIDAGE DE VEHICULES ET DE SYSTEMES DE TRANSPORT A SUSTENTATION

(30) Priorität: 24.04.2001 DE 10120990
(43) Veröffentlichungstag der Anmeldung: 21.01.2004
(73) Patentinhaber: Leibniz-Institut für Festkörper- und Werkstoffforschung Dresden e.V., 01069 Dresden (DE)
(72) Erfinder: FALTER, Martina, 01462 Cossebaude (DE); BARTUSCH, Peter, 01259 Dresden (DE); SCHULTZ, Ludwig, 01328 Dresden (DE)
(74) Vertreter: Rauschenbach, Dieter
(86) Internationale Anmeldenummer: PCT/DE2002/001508
(87) Internationale Veröffentlichungsnummer: WO 2002/085662

(56) Entgegenhaltungen:
- EP-A- 0 695 026
- EP-A- 1 080 982
- JP-A- 05 058 451
- US-A- 5 521 570
- US-A- 5 631 617

## Beschreibung

### Technisches Gebiet

Die Erfindung betrifft Magnetanordnung für die Aufhängung und Führung schwebender Fahrzeuge und Transportsysteme. Die Magnetanordnung ist insbesondere bei solchen Fahrzeugen und Transportsystemen anwendbar, die zur Fortbewegung entlang einer Magnetschiene ohne deren Berührung ausgebildet sind und die damit eine reibungs- und abriebfreie Fortbewegung ermöglichen.

### Stand der Technik

Prinzipiell können 2 Magnete nicht eine stabile Position zueinander ohne Berührung bzw. Halterung einnehmen. Daher benötigt jedes magnetische Transportsystem, das auf der magnetischen Levitation beruht, eine mechanische Halterung oder eine Regelung der Magnetfelder. Soll mit diesen Elementen eine magnetische Führung für einen stabilen Schwebezustand realisiert werden, sind neben Tragemagneten noch zusätzliche Führungsmagnete notwendig.

Eine stabile berührungsfreie magnetische Aufhängung ist allerdings mit Supraleitern in geeignet geformten Magnetfeldern möglich, da ein Supraleiter im Gegensatz zu allen anderen Materialien entweder nicht in ein magnetisches Feld eindringt oder aber ein einmal in seinem Inneren vorhandenes Magnetfeld unverändert erhält. Dies wird verursacht durch den Umstand, dass magnetischer Fluss in einen Supraleiter in Form von Flusslinien eindringt, die an Defekten im Material verankert werden können. Wird dementsprechend ein Supraleiter, der viele sogenannte Pinningzentren enthält, in einem inhomogenen Magnetfeld unter seine supraleitende Sprungtemperatur abgekühlt, so kann die Form dieses äußeren Magnetfelds in der jeweiligen Position im Supraleiter "eingefroren" werden. Wird nun versucht, den Supraleiter aus dieser Position herauszubringen, so wirkt dem eine Rückstellkraft entgegen, die sehr groß sein kann. Wird also z.B. der Supraleiter in einer Position, die einige Millimeter oder Zentimeter oberhalb einer Magnetschiene mittels eines Abstandshalters festgelegt wird, supraleitend gemacht, so behält der Supraleiter diese Position auch nach Entfernen des Abstandshalters bei, ohne die Schiene zu berühren. Der Supraleiter hat also im Magnetfeld sowohl eine abstoßende als auch anziehende Wirkung. Hat die Magnetschiene entlang ihrer Länge ein gleichförmiges Magnetfeld, so kann sich der Supraleiter entlang der Schiene berührungsfrei und damit auch reibungs- und abriebfrei bewegen.

Mit Hilfe dieses Prinzips wurde bereits die Möglichkeit des berührungsfreien Transports in einem Schwebezustand über einer Magnetschiene, aber auch entlang einer Wand, die mit einer Magnetschiene ausgestattet ist, sowie frei hängend unter einer Magnetschiene demonstriert. Der Nachteil einer solchen Anordnung liegt darin, dass Supraleiter eine Kühlung benötigen. Bei Ausfall der Kühlung würde ein solches hängendes Transportsystem bei fehlender zusätzlicher Sicherung den Absturz zur Folge haben.

Die US 5,631,617 beschreibt ein System mit schwebendem Fahrzeug unter Verwendung eines Supraleiters.

### Darstellung der Erfindung

Der Erfindung liegt die Aufgabe zugrunde, für schwebende Fahrzeuge und Transportsysteme eine intrinsisch stabile berührungsfreie magnetische Aufhängung und Führung zu schaffen, die aus einer Magnetteileanordnung und einer Supraleiteranordnung besteht.

Diese Aufgabe wird nach der Erfindung mit der in den Patentansprüchen beschriebenen Magnetanordnung gelöst.

Erfindungsgemäß ist die Magnetteileanordnung mit zumindest einem ihrer Teile mit der Supraleiteranordnung körperlich verbunden, sind die Magnetteile aus ferromagnetischen hartmagnetischen Materialien und/oder als Elektromagneten ausgeführt und die Magnetteileanordnung und die Supraleiteranordnung sind zur Aufrechterhaltung eines stabilen Abstandes zwischen mindestens zwei Magnetteilen unter der Ausnutzung eines im Supraleiter eingefrorenen Magnetfeldes magnetisch miteinander gekoppelt.

Die Magnetteileanordnung kann dabei aus einem oder mehreren Paaren sich anziehender oder abstoßender Magnetteile bestehen, die durch die Supraleiteranordnung in einem stabilen Abstand gehalten werden.

Die Supraleiteranordnung kann aus einem oder mehreren Supraleitern bestehen.

Die Magnetteileanordnung kann zweckmäßigerweise eines oder mehrere schienenförmig ausgebildete Magnetteile enthalten.

Die Magnetteile können aus ferromagnetischen weichmagnetischen oder ferromagnetischen hartmagnetischen Materialien bestehen und/oder sie können als Elektromagnete ausgeführt sein.

An Stelle ferromagnetischer hartmagnetischer Materialien können auch Supraleiter verwendet sein.

Gemäß einer zweckmäßigen Ausgestaltung der Erfindung ist die Supraleiteranordnung mit Supraleitern ausgerüstet, die aus schmelztexturiertem YBaCuO-Material bestehen.

Gemäß einer vorteilhaften Ausgestaltung der Erfindung ist Vorteilhaft ist die Supraleiteranordnung zumindest teilweise mit einem wärmedämmenden Material umgeben. Neben der Supraleiteranordnung kann auch die Magnetteileanordnung zumindest teilweise mit einem wärmedämmenden Material umgeben sein.

Zur Vermeidung von Oxidation und/oder Feuchtigkeitseinwirkung kann die Supraleiteranordnung zumindest teilweise mit einer Schutzschicht versehen sein.

### Wege zur Ausführung der Erfindung

Nachstehend ist die Erfindung an Hand von Ausführungsbeispielen näher erläutert. In den zugehörigen Zeichnungen zeigen:
- Fig. 1:: in Prinzipdarstellung eine berührungsfreie Magnetaufhängung zum Transport von Gütern,
- Fig. 2:: in Prinzipdarstellung eine weitere berührungsfreie Magnetaufhängung zum Transport von Gütern,
- Fig. 3:: in Prinzipdarstellung eine berührungsfreie Magnetanordnung an einem Schienenfahrzeug.

### Beispiel 1

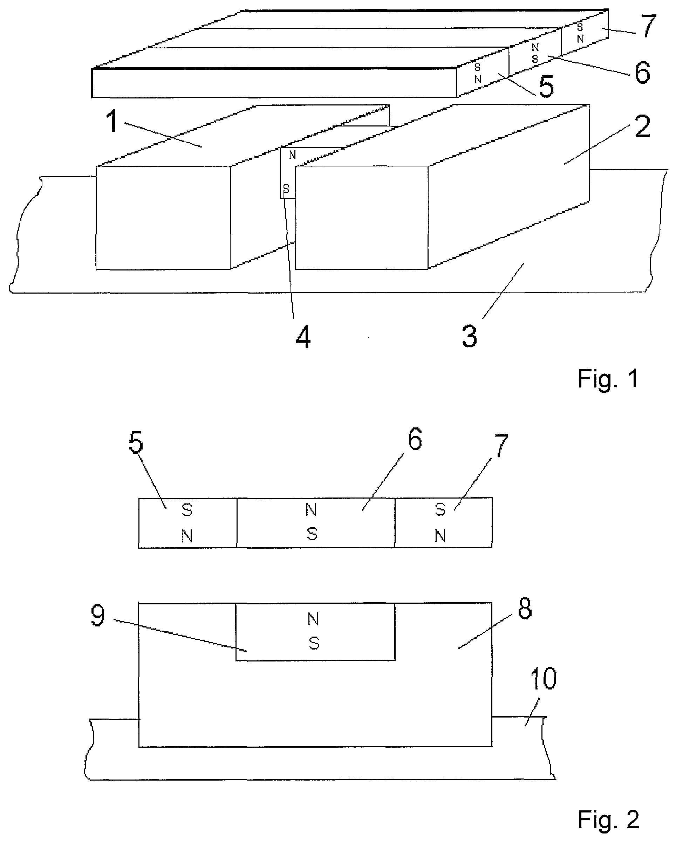

Bei der in Fig. 1 dargestellten Magnetaufhängung sind zwei Supraleiter 1;2 im Abstand zueinander auf einem nur teilweise dargestellten Träger 3 befestigt. Der Träger 3 dient zur Aufnahme von zu transportierenden Gütern. Die Supraleiter 1;2 sind fest mit einem Magnetteil 4 verbunden, das aus ferromagnetisch hartmagnetischem Material besteht. Diese Anordnung hängt in einem konstanten Abstand unter drei nebeneinander angeordneten Magnetschienen 5;6;7, die entlang ihrer Länge ein gleichförmiges Magnetfeld besitzen.

Die äußeren Magnetschienen 5 und 7 sind magnetisch so gepolt, dass sich deren Nordpole unten befinden. Dagegen befindet sich bei der dazwischen angeordneten Magnetschiene 6 der Südpol unten.

Die Supraleiter 1;2 bestehen aus schmelztexturiertem YBaCuO-Material. Sie sind in einem Abstand von einigen Millimetern unterhalb der Magnetschienen 5;6;7 mittels eines in der Zeichnung nicht dargestellten zwischengelegten Abstandshalters fixiert und in dieser Position unter ihre supraleitende Sprungtemperatur abgekühlt und dadurch supraleitend gemacht worden. Dabei ist die Form des inhomogenen äußeren Magnetfeldes, welches ausgehend vom Magnetteil 4 und den Magnetschienen 5;6;7 auf die Supraleiter 1;2 einwirkt, in den Supraleitern 1;2 an deren Pinningzentren eingefroren worden. Dadurch behalten die Supraleiter 1;2 nach dem Entfernen des Abstandshalters ihre Position gegenüber den Magnetschienen 5;6;7 bei. Dies betrifft sowohl den Abstand zwischen den Supraleitern 1;2 und den Magnetschienen 5;6;7, als auch die Position der Supraleiter 1;2 quer zur Längsachse der Magnetschienen 5;6;7. Jeder Kraft, welche in Richtung einer Positionsveränderung wirkt, wirkt eine von den Supraleitern 1;2 ausgehende Rückstellkraft entgegen. Damit wird sowohl eine sichere Aufhängung als auch die Führung der Transportanordnung gewährleistet. Hierbei werden die seitlichen Führkräfte senkrecht zur Längsachse der Magnetschienen 5;6;7 durch das Magnetteil 4 noch verstärkt.

In Richtung der Längsachse der Magnetschienen 5;6;7 ist die aus den Supraleitern 1;2 und dem Magnetteil 4 bestehende Anordnung mit dem Träger 3 jedoch ohne Widerstand bewegbar, da die Magnetschienen 5;6;7 entlang ihrer Länge ein gleichförmiges Magnetfeld aufweisen. Auf Grund des zwischen den Supraleitern 1;2 und den Magnetschienen 5;6;7 gehaltenen konstanten Abstandes ist diese Bewegung berührungsfrei und damit reibungs- und abriebfrei.

Im Falle einer gewollten oder ungewollten Unterbrechung der Supraleiterwirkung würde das Magnetteil 4 an die Magnetschiene 6 gezogen und so ein Absturz der aus den Supraleitern 1;2, dem Magnetteil 4 dem Träger 3 bestehenden Anordnung verhindert.

### Beispiel 2

Dieses Beispiel lehnt sich an die im Beispiel 1 beschriebene Magnetanordnung an und betrifft eine besonders raumsparende Ausführungsmöglichkeit.

Hier ist gemäß Fig. 2 unter den Magnetschiene 5; 6; 7 nur ein einzelner Supraleiter 8 schwebend positioniert, in dem jedoch ein Magnetteil 9 enthalten ist. Das Magnetteil 9 besteht aus ferromagnetisch hartmagnetischem Material. Die aus Supraleiter 8 und Magnetteil 9 bestehende Anordnung ist mit einem Träger 10 für die Aufnahme von Transportgütern verbunden.

Die äußeren Magnetschienen 5 und 7 sind magnetisch so gepolt, dass sich deren Nordpole unten befinden. Dagegen befindet sich bei der dazwischen angeordneten Magnetschiene 6 der Südpol unten. Das Magnetteil 9 ist so angeordnet, dass dessen Nordpol zur Magnetschiene 6 gerichtet ist.

Das inhomogene äußere Magnetfeld, welches ausgehend vom Magnetteil 9 und den Magnetschienen 5;6;7 auf den Supraleiter 8 einwirkt, ist im Supraleiter 8 an dessen Pinningzentren eingefroren worden. Dadurch behält der Supraleiter 8 mit dem Magnetteil 9 analog wie im Beispiel 1 beschrieben seinen Abstand und seine seitliche Position zu den Magnetschienen 5;6;7 bei.

Auf Grund des vom Supraleitern 8 zu den Magnetschienen 5;6;7 gehaltenen konstanten Abstandes ist diese Bewegung berührungsfrei und damit reibungs- und abriebfrei.

### Beispiel 3

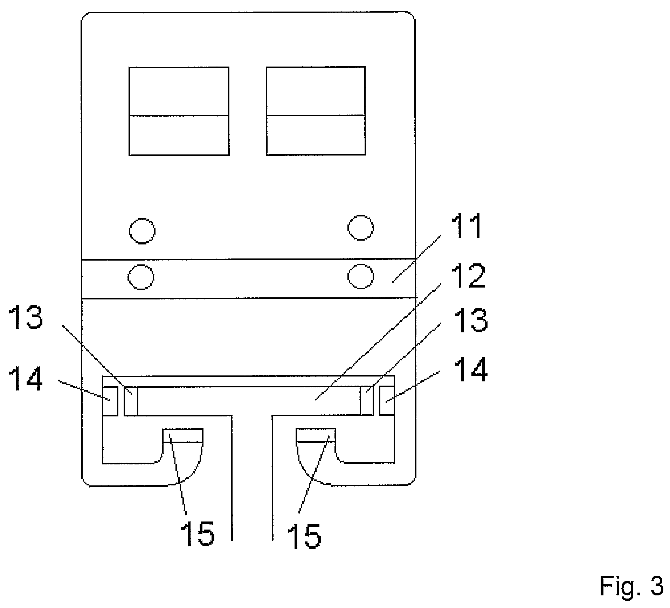

Dieses Beispiel betrifft die Anwendung der erfindungsgemäßen Magnetanordnung an einem Schienenfahrzeug 11 in der Art einer Magnetschnellbahn, welches sich berührungslos entlang einer T-förmigen Schiene 12 bewegt (Fig. 3). Dabei sind an den Enden des Querträgers der T-förmigen Schiene 12 Elektromagnete 13 angeordnet, die ein in senkrechter und in seitlicher Richtung inhomogenes, in Schienenlängsrichtung jedoch gleichförmiges Magnetfeld erzeugen. Den Elektromagneten 13 gegenüber sind an der Unterseite des Schienenfahrzeugs 11 Supraleiter 14 angeordnet, welche die Funktion der im Beispiel 1 beschriebenen Supraleiter 1;2 ausüben, indem sie sowohl die Aufhängung als auch die Führung des Schienenfahrzeugs 11 gewährleistet.

Getragen wird das Schienenfahrzeug 11 schwebend mit Hilfe von Elektromagneten 15, die sich unterhalb der aus ferromagnetischem Material bestehenden Schiene 12 befinden, wobei zwischen den Elektromagneten 15 und der Schiene 12 anziehende Magnetkräfte herrschen.

Zum Antrieb des Schienenfahrzeugs 11 dient in bekannter Weise ein in der Zeichnung nicht dargestellter synchroner Langstator-Linearmotor.

## Patentansprüche

1. Magnetanordnung für die Aufhängung und Führung schwebender Fahrzeuge und Transportsysteme, bestehend aus einer Magnetteileanordnung und einer Supraleiteranordnung, **dadurch gekennzeichnet, dass** die Magnetteileanordnung **(4, 5, 6, 7, 9)** mit zumindest einem ihrer Teile mit der Supraleiteranordnung **(1, 2, 8)** körperlich verbunden ist, **dass die Magnetteile (4, 5, 6, 7, 9) aus ferromagnetischen hartmagnetischen Materialien bestehen und/oder als Elektromagnete ausgeführt sind, und** dass die Magnetteileanordnung **(4, 5, 6, 7, 9)** und die Supraleiteranordnung **(1, 2, 8)** zur Aufrechterhaltung eines stabilen Abstandes zwischen mindestens zwei Magnetteilen **(4, 5, 6, 7, 9)** unter der Ausnutzung eines im Supraleiter **(1, 2, 8)** eingefrorenen Magnetfeldes magnetisch miteinander gekoppelt sind.

2. Magnetanordnung nach Anspruch 1, **dadurch gekennzeichnet, dass** die Magnetteileanordnung **(4, 5, 6, 7, 9)** aus einem oder mehreren Paaren sich anziehender oder abstoßender Magnetteile **(4, 5, 6, 7, 9)** bestehen, die durch die Supraleiteranordnung **(1, 2, 8)** in einem stabilen Abstand gehalten werden.

3. Magnetanordnung nach Anspruch 1, **dadurch gekennzeichnet, dass** die Supraleiteranordnung **(1, 2, 8)** aus einem oder mehreren Supraleitern **(1, 2, 8)** besteht.

4. Magnetanordnung nach Anspruch 1, **dadurch gekennzeichnet, dass** die Magnetteileanordnung **(4, 5, 6, 7, 9)** ein oder mehrere schienenförmig ausgebildete Magnetteile **(5, 6, 7, 9)** enthält.

5. Magnetanordnung nach Anspruch 1, **dadurch gekennzeichnet, dass** an Stelle ferromagnetischer hartmagnetischer Materialien Supraleiter verwendet sind.

6. Magnetanordnung nach Anspruch 1, **dadurch gekennzeichnet, dass** die Supraleiteranordnung **(1, 2, 8)** mit Supraleitern ausgerüstet ist, die aus schmelztexturiertem YBaCuO-Material besteht.

7. Magnetanordnung nach Anspruch 1, **dadurch gekennzeichnet, dass** die Supraleiteranordnung **(1, 2, 8)** zumindest teilweise mit einem wärmedämmenden Material umgeben ist.

8. Magnetanordnung nach Anspruch 1 und 7, **dadurch gekennzeichnet, dass** neben der Supraleiteranordnung (1, 2, 8) auch die Magnetteileanordnung **(4, 5, 6, 7, 9)** zumindest teilweise mit einem wärmedämmenden Material umgeben ist.

9. Magnetanordnung nach Anspruch 1, **dadurch gekennzeichnet, dass** die Supraleiteranordnung **(1, 2, 8)** zumindest teilweise mit einer Schutzschicht gegen Oxidation und/oder Feuchtigkeitseinwirkung versehen ist.

## Claims

1. Magnet arrangement for suspending and guiding levitating vehicles and transportation systems, comprising a magnet parts arrangement and a superconductor arrangement, **characterized in that** the magnet parts arrangement (4, 5, 6, 7, 9) is physically connected by way of at least one of its parts to the superconductor arrangement (1, 2, 8), **in that** the magnet parts (4, 5, 6, 7, 9) are composed of ferromagnetic hard-magnetic materials and/or are designed as solenoids, and **in that** the magnet parts arrangement (4, 5, 6, 7, 9) and the superconductor arrangement (1, 2, 8) are magnetically coupled to one another in order to maintain a stable distance between at least two magnet parts (4, 5, 6, 7, 9) utilizing a magnetic field which is frozen in the superconductor (1, 2, 8).

2. Magnet arrangement according to Claim 1, **characterized in that** the magnet parts arrangement (4, 5, 6, 7, 9) comprises one or more pairs of attracting or repelling magnet parts (4, 5, 6, 7, 9) which are held at a stable distance by the superconductor arrangement (1, 2, 8).

3. Magnet arrangement according to Claim 1, **characterized in that** the superconductor arrangement (1, 2, 8) comprises one or more superconductors (1, 2, 8).

4. Magnet arrangement according to Claim 1, **characterized in that** the magnet parts arrangement (4, 5, 6, 7, 9) contains one or more magnet parts (5, 6, 7, 9) which are designed in the form of rails.

5. Magnet arrangement according to Claim 1, **characterized in that** superconductors are used instead of ferromagnetic hard-magnetic materials.

6. Magnet arrangement according to Claim 1, **characterized in that** the superconductor arrangement (1, 2, 8) is equipped with superconductors which are composed of melt-textured YBaCuO material.

7. Magnet arrangement according to Claim 1, **characterized in that** the superconductor arrangement (1, 2, 8) is at least partially surrounded by a thermally insulating material.

8. Magnet arrangement according to Claims 1 and 7, **characterized in that**, in addition to the superconductor arrangement (1, 2, 8), the magnet parts arrangement (4, 5, 6, 7, 9) is also at least partially surrounded by a thermally insulating material.

9. Magnet arrangement according to Claim 1, **characterized in that** the superconductor arrangement (1, 2, 8) is at least partially provided with a protective layer against oxidation and/or the action of moisture.

## Revendications

1. Ensemble magnétique pour la sustentation et le guidage de véhicules et de systèmes de transport à sustentation, se composant d'un ensemble de pièces magnétiques et d'un ensemble supraconducteur, **caractérisé en ce que** l'ensemble de pièces magnétiques (4, 5, 6, 7, 9) est physiquement relié par au moins une de ses pièces à l'ensemble supraconducteur (1, 2, 8), **en ce que** les pièces magnétiques (4, 5, 6, 7, 9) se composent de matériaux ferromagnétiques magnétiques durs et/ou sont réalisées sous forme d'électroaimants, et **en ce que** l'ensemble de pièces magnétiques (4, 5, 6, 7, 9) et l'ensemble supraconducteur (1, 2, 8) sont magnétiquement couplés l'un à l'autre pour le maintien d'une distance stable entre au moins deux pièces magnétiques (4, 5, 6, 7, 9) en utilisant un champ magnétique figé dans le supraconducteur (1, 2, 8).

2. Ensemble magnétique selon la revendication 1, **caractérisé en ce que** l'ensemble de pièces magnétiques (4, 5, 6, 7, 9) se compose d'une ou de plusieurs paire(s) de pièces magnétiques qui s'attirent ou qui se repoussent (4, 5, 6, 7, 9), qui sont maintenues à une distance stable par l'ensemble supraconducteur (1, 2, 8).

3. Ensemble magnétique selon la revendication 1, **caractérisé en ce que** l'ensemble supraconducteur (1, 2, 8) se compose d'un ou de plusieurs supraconducteur (s) (1, 2, 8).

4. Ensemble magnétique selon la revendication 1, **caractérisé en ce que** l'ensemble de pièces magnétiques (4, 5, 6, 7, 9) contient une ou plusieurs pièce (s) magnétique(s) réalisées en forme de rail (5, 6, 7, 9).

5. Ensemble magnétique selon la revendication 1, **caractérisé en ce que** des supraconducteurs sont utilisés au lieu de matériaux ferromagnétiques magnétiques durs.

6. Ensemble magnétique selon la revendication 1, **caractérisé en ce que** l'ensemble supraconducteur (1, 2, 8) est équipé de supraconducteurs, qui sont composés de matériau texturé par fusion YBaCuO.

7. Ensemble magnétique selon la revendication 1, **caractérisé en ce que** l'ensemble supraconducteur (1, 2, 8) est entouré au moins en partie par un matériau thermo-isolant.

8. Ensemble magnétique selon la revendication 1 et 7, **caractérisé en ce qu'**en plus de l'ensemble supraconducteur (1, 2, 8), l'ensemble de pièces magnétiques (4, 5, 6, 7, 9) est également entouré au moins en partie par un matériau thermo-isolant.

9. Ensemble magnétique selon la revendication 1, **caractérisé en ce que** l'ensemble supraconducteur (1, 2, 8) est doté au moins en partie d'une couche de protection contre l'oxydation et/ou l'action de l'humidité.
